Europäisches Patentamt

European Patent Office

Office européen des brevets

(11) Veröffentlichungsnummer: **0 322 523**
**A2**

# EUROPÄISCHE PATENTANMELDUNG

(21) Anmeldenummer: **88117000.5**

(22) Anmeldetag: **13.10.88**

(51) Int. Cl.⁴: **G05B 19/42 , D05B 19/00**

(30) Priorität: **31.10.87 DE 3737078**

(43) Veröffentlichungstag der Anmeldung:
**05.07.89 Patentblatt 89/27**

(84) Benannte Vertragsstaaten:
**AT BE DE ES FR GB IT**

(71) Anmelder: **Frankl & Kirchner GmbH. & Co. KG**
**Fabrik für Elektromotoren und elektrische**
**Apparate**
**Scheffelstrasse 73**
**D-6830 Schwetzingen(DE)**

(72) Erfinder: **Olbrich, Bernd, Dipl.-Ing.**
**Kastanienweg 28**
**D-6830 Schwetzingen/Baden(DE)**

(74) Vertreter: **Schneck, Herbert, Dipl.-Phys., Dr. et**
**al**
**Rau & Schneck Patentanwälte Königstrasse**
**2**
**D-8500 Nürnberg 1(DE)**

(54) **Verfahren zur digitalen Abspeicherung einer Nähmuster-Vorlage für eine Industrie-Nähmaschine und Vorrichtung zur manuellen Korrektur einer abgespeicherten Nähmuster-Vorlage.**

(57) Bei einem Verfahren zur digitalen Erfassung und Abspeicherung eines Nähmusters für eine Industrie-Nähmaschine ist zur Erzielung einer schnellen und fehlerfreien Erfassung vorgesehen, daß ausgehend von einer Null-Stellung der antreibenden Schrittmotoren der Nähgut-Träger programmgesteuert derart verfahren wird, daß eine auf dem Nähgut-Träger angeordnete Nähmuster-Vorlage flächig abgetastet wird, wobei die inkrementalen X- bzw. Y-Positionswerte jedes Schrittmotors immer dann abgespeichert werden, wenn der Sensor einen Hell-Dunkel-Kontrast auf der Nähmuster-Vorlage detektiert. Weiterhin ist zur Vornahme einer manuellen Eingabe bzw. von Korrekturen eine Vorrichtung vorgesehen, wie sie sich dadurch auszeichnet, daß eine Dreh-Einrichtung zur Einstellung des gewünschten Richtungswinkels des Nähmuster-Verlaufs vorgesehen ist, welche in einer Richtung senkrecht zu der Dreh-Einstellebene gegen eine Rückstellfeder zur Auslösung eines Kontakts betätigbar ist.

FIG. 2

## Verfahren zur digitalen Abspeicherung einer Nähmuster-Vorlage für eine Industrie-Nähmaschine und Vorrichtung zur manuellen Korrektur einer abgespeicherten Nähmuster-Vorlage

Die Erfindung richtet sich auf ein Verfahren zur digitalen Abspeicherung eines Nähmusters für eine Industrie-Nähmaschine mit einem durch wenigstens zwei Schrittmotoren angetriebenen, in X- und Y-Richtung nach einem abgespeicherten Programm verfahrbaren Nähgutträger und mit einem auf Hell-Dunkel-Kontraste ansprechenden, an oder vor dem Nähkopf angeordneten Sensor.

Bei programmgesteuerten Industrie-Nähmaschinen wird in der Regel der Nähgutträger durch Schrittmotoren in X- bzw. Y-Richtung derart angetrieben, daß die resultierende Bewegung einem vorgegebenen Nahtverlauf folgt. Zur entsprechenden Ansteuerung der Schrittmotoren ist es erforderlich, daß der Nahtverlauf in digitaler Form ausgehend von einer Nähmuster-Vorlage erfaßt und abgespeichert wird, wobei die Nähmuster-Vorlage aus einer Zeichnung oder einer handgenähten Musternaht bestehen kann.

Zur Digitalisierung derartiger Nahtverläufe ist es bekannt, sogenannte Digitalisierbretter zu verwenden und auf diese Weise den Nahtverlauf Punkt für Punkt zu erfassen. Weiterhin kommt grundsätzlich die Verwendung anderer Abtasteinrichtungen in Betracht, welche kurz als "Maus" oder "Joystick" bezeichnet werden.

Weiterhin ist es z.B. aus der DE-PS 19 45 328 und der DE-PS 21 21 691 bekannt, bei dem Nachfahren eines Nahtverlaufes zur Gewinnung digitalisierter Werte eine optische Abtasteinrichtung zu Hilfe zu nehmen, welche sicherstellt, daß lediglich dann Positionswerte in den Speicher übernommen werden, wenn beim Abruf des jeweiligen Wertes die Abtastvorrichtung auch tatsächlich zur Deckung mit der Naht kommt. Auf diese Weise werden Fehler bei der Digitalisierung vermieden. Zur Vermeidung derartiger Fehler ist es im übrigen auch schon bekannt, der Abtastvorrichtung eine Lupe zuzuordnen, um der Bedienungsperson eine exakte Lokalisierung über dem Nähmuster zu ermöglichen.

Hiervon ausgehend liegt der Erfindung die Aufgabe zugrunde, den zur Digitalisierung einer Nähmuster-Vorlage erforderlichen Abtastvorgang so zu vereinfachen, daß für den eigentlichen Abtastvorgang eine Bedienungsperson entbehrlich wird, wobei gleichzeitig auch die mit der Abtastung durch eine Bedienungsperson verbundenen Fehler vermieden werden sollen.

Diese Aufgabe wird erfindungsgemäß dadurch gelöst, daß ausgehend von einer Null-Stellung der antreibenden Schrittmotoren der Stoffträger programmgesteuert derart verfahren wird, daß eine auf dem Nähgutträger angeordnete Nähmuster-Vorlage flächig, vorzugsweise mäanderförmig, abgetastet wird, wobei die inkrementalen X- bzw. Y-Positionswerte jedes Schrittmotors immer dann abgespeichert werden, wenn der Sensor einen Hell-Dunkel-Kontrast auf der Nähmuster-Vorlage detektiert.

Erfindungsgemäß wird also insofern eine völlig neue Konzeption eingeschlagen, als der ohnehin vorhandene, programmgesteuerte Antrieb des Nähgut-Trägers einer Industrie-Nähmaschine dazu herangezogen wird, als eine Art programmgesteuerte Scanning-Vorrichtung zu arbeiten, wobei die Nähmuster-Vorlage in ihrer Gesamtheit ohne Berücksichtigung und visuelle Erfassung des Nahtverlaufes abgetastet wird. Hierdurch wird nicht nur eine Bedienungsperson für den eigentlichen Abtastvorgang entbehrlich, sondern es werden auch Fehler der Bedienungsperson ausgeschieden. Die Abtastgenauigkeit kann über ein vorwählbares Scanning-Programm praktisch stufenlos eingestellt werden und erreicht in jedem Fall aber die Genauigkeit der das Programm dann abarbeitenden Antriebe, da diese selbst zur Gewinnung der Positionssignale herangezogen werden. Durch eine an sich bekannte veränderbare Empfindlichkeitseinstellung des abtastenden Sensors kann erreicht werden, daß dieser nur auf durch das eigentliche Nähmuster bedingte Kontrastunterschiede reagiert, während Helligkeitsänderungen aufgrund von Verfärbungen der Vorlage u.dgl. unberücksichtigt bleiben. Die erhaltenen Daten können durch geeignete Filterprogramme auf Plausibilität untersucht und modifiziert werden.

Als abtastender Sensor wird am einfachsten eine Reflexions-Lichtschranke verwendet, wie sie im Prinzip aus der Nähmaschinen-Technik zur Kantenerfassung bereits bekannt ist. Grundsätzlich kann natürlich auch im Durchlicht-Verfahren gearbeitet werden.

In weiterer Ausgestaltung des erfindungsgemäßen Verfahrens ist vorgesehen, daß der Versatz zwischen Sensor und Nähnadel als Korrekturwert bei der Abarbeitung des digital erfaßten abgespeicherten Nahtverlaufes manuell eingegeben wird. Eine derartige manuelle Eingabe in jedem Einzelfall ist dann entbehrlich, wenn dieser Versatz aufgrund einer ortsfesten Anordnung des Sensors gleich bleibt, so daß er als Gerätekonstante im Programm bei der Abarbeitung berücksichtigt werden kann.

Bei Anwendungsfällen, bei welchen der Sensor in seiner Position verändert wird, oder dann, wenn der abgespeicherte Nahtverlauf zur Abarbeitung an einer anderen Nähmaschine verwendet werden soll, ist vorgesehen, daß der Versatz zwischen Nähnadel und Sensor derart automatisch erfaßt wird, daß auf dem Nähgutträger exakt unter der Nähnadel, vorzugsweise bei Null-Lage des Nähgut-Trägers, eine punktförmige Markierung angeordnet wird, und daß anschließend der Nähgut-Träger programmgesteuert so lange verfahren wird, bis die Markierung von dem Sensor detektiert wird, wobei die dementsprechend erfaßten Koordinatenwerte als Korrekturwerte bei der Abarbeitung des abgespeicherten Nahtverlaufes berücksichtigt werden.

Durch das erfindungsgemäße Verfahren ist es also besonders einfach möglich, einen bestimmten Nahtverlauf digitalisiert zu erfassen und abzuspeichern. Durch entsprechende Eingabe-Einrichtungen können unter Beibehaltung des grundsätzlichen Nahtbildes für eine spezifische Naht charakteristische Parameter, wie z.B. die Lage des Nahtanfangspunktes oder des geometrischen Schwerpunktes, der für Koordinatentransformationen notwendig ist, geändert werden.

Demgegenüber erscheint es aber auch wünschenswert, den Nahtverlauf als solchen anhand eines über ein Display ausgegebenen und abgespeicherten Nahtbildes oder durch Unterbrechung der Abarbeitung eines abgespeicherten Nahtbildes zu verändern.

Dementsprechend betrifft die Erfindung auch eine Vorrichtung zur nachträglich manuellen Korrektur eines gemäß dem erfindungsgemäßen Verfahren erfaßten und abgespeicherten Nahtverlaufes.

Eine derartige Vorrichtung zeichnet sich dadurch aus, daß eine Dreh-Einrichtung zur Einstellung des gewünschten, geänderten Richtungswinkels des Nahtverlaufs vorgesehen ist, welche in eine Richtung senkrecht zu der Dreh-Einstellebene gegen eine Rückstellfeder zur Auslösung eines Kontakts betätigbar ist. Eine derartige Dreh-Einrichtung kann beispielsweise als mit einer Fingermulde versehener Drehknopf ausgebildet sein.

Vorzugsweise ist vorgesehen, daß die Dreh-Einrichtung einen Inkrementalgeber mit zugeordnetem Sensor zur Erfassung eines Winkellage-Signals umfaßt, wobei durch den Druckkontakt das zum Zeitpunkt der Auslösung dieses Kontakts jeweils anliegende Winkellage-Signal abgespeichert wird.

Zur Vereinfachung werden hier die Eingabemittel und -verfahren zum Anwählen, Einfügen, Löschen, Verändern des Maßstabs, Verschieben usw. von einem oder mehreren Stichen nicht betrachtet.

Auf diese Weise ist es also möglich, für eine Mehrzahl von Positionen entsprechend einem partiell geänderten Nahtverlauf einfach und schnell die entsprechenden geänderten Richtungswerte einzustellen und abzuspeichern. Durch die entsprechend leichte Handhabbarkeit können nicht nur einzelne Stiche längs eines Nahtverlaufes, sondern auch So größere Bereiche ohne erheblichen Aufwand gegenüber der ursprünglich abgespeicherten Musternaht geändert werden.

Weitere Merkmale, Vorteile und Einzelheiten der Erfindung ergeben sich aus der folgenden Beschreibung einer bevorzugten Ausführungsform anhand der Zeichnung. Dabei zeigen:

Fig. 1 eine schematische Aufsicht einer erfindungsgemäßen Eingabevorrichtung und

Fig. 2 einen Schnitt durch eine Eingabevorrichtung gemäß Fig. 1.

Eine in der Zeichnung dargestellte Eingabevorrichtung umfaßt ein Gehäuse, von welchem lediglich die Abdeckplatte 1 dargestellt ist.

In die Abdeckplatte 1 ist ein Drehknopf 2 eingelassen, welcher mittels einer Fingermulde 3 gedreht werden kann.

An dem Drehknopf 2 ist an seiner Unterseite ein zylinderförmiger Ansatz 4 angeformt, an welchem eine Inkremental-Geberscheibe 5 befestigt ist, welche in einen z.B optischen Sensor 6 mit elektrischen Anschlüssen 7, B eingreift. Ein derartiger Inkremental-Geber ist z.B als Schlitzscheibe mit zugeordneter Durchlichtschranke, als Scheibe mit unterschiedlich reflektierenden radialen Strichen und Reflexions-Lichtschranke o. dgl. in an sich bekannter Weise ausgebildet.

In einem Gehäuseabschnitt 9 ist eine Schraubenfeder 1o angeordnet, welche sich am Boden 11 des Gehäuseabschnitts 9 einerseits und am Boden 12 des Ansatzes 4 des Drehknopfs 2 andererseits abstützt.

Ein verjüngter Abschnitt IS des Ansatzes 4 durchsetzt die Schraubenfeder 1o und eine Bohrung im Boden 11 des Gehäuseteils 9, unterhalb welcher ein federnder Kontakt 14 und ein Gegenkontakt 15 angeordnet sind. Durch Drücken auf den Drehknopf 2 gegen die Rückstellkraft der Feder 1o werden die Kontakte 14 und 15 in Berührung gebracht und nach Loslassen des Druckknopfes wieder geöffnet.

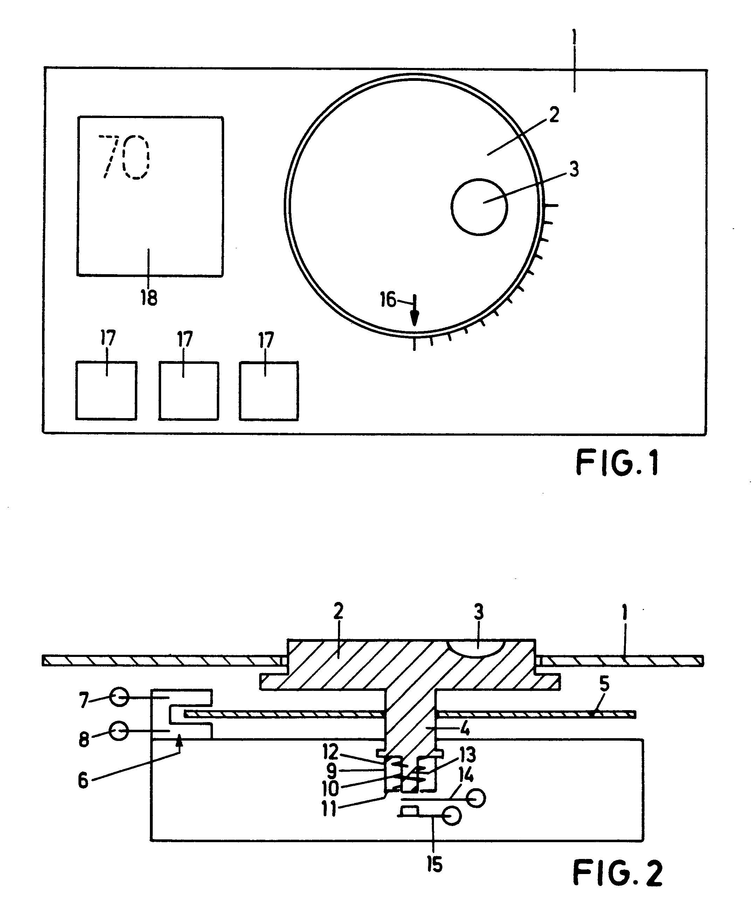

Wie insbesondere aus Fig 1 deutlich wird, ermöglicht es der Drehknopf 2 in Verbindung mit einer pfeilartigen Richtungsmarkierung 16 am Drehknopf selbst und Richtungsmarkierungen an der Oberseite der Abdeckung 1 an der Peripherie des Drehknopfes 2 eine bestimmte Richtung einzustellen entsprechend der Richtung im Nähmuster, in welche ein bestimmter Stich ausgeführt werden soll. Nach Einstellung der gewünschten Richtung mittels des Drehknopfes 2 bzw. der Markierung 16 kann diese Richtung durch Drücken des Drehknopfes 2 über das hierdurch betätigte Kontaktpaar 14, 15 eingegeben (quittiert) werden.

In Fig. 1 ist weiterhin veranschaulicht, daß die Abdeckung 1 des Gehäuses eine Anzeigeeinrichtung 18 und eine Mehrzahl von Eingabe-Tasten 17 aufweisen kann.

Die Anzeigeeinrichtung 18 kann z.B die Nummer des jeweiligen Nahtbildes, die jeweilige Stichlänge, Art oder Nummer des gerade einzuprogrammierenden Stiches und den zugehörigen Winkelwert anzeigen.

Über die Tasten 17 kann die Auswahl der Betriebsart, das Einfügen und Löschen von Stichen, das Verkleinern oder Vergrößern, das Lesen bzw. Schreiben von Daten von/auf Massespeicher usw. bewerkstelligt werden.

**Ansprüche**

1. Verfahren zur digitalen Erfassung und Abspeicherung eines Nähmusters für eine Industrie-Nähmaschine mit einem durch wenigstens zwei Schrittmotoren angetriebenen, in X- und Y-Richtung nach einem abgespeicherten Programm verfahrbaren Nähgut-Träger und mit einem auf Hell-Dunkel-Kontraste ansprechenden, an oder vor dem Nähkopf angeordneten Sensor, dadurch gekennzeichnet, daß ausgehend von einer Null-Stellung der antreibenden Schrittmotoren der Nähgut-Träger programmgesteuert derart verfahren wird, daß eine auf dem Nähgut-Träger angeordnete Nähmuster-Vorlage flächig abgetastet wird, wobei die inkrementalen X- bzw. Y-Positionswerte jedes Schrittmotors immer dann abgespeichert werden, wenn der Sensor einen Hell-Dunkel-Kontrast auf der Nähmuster-Vorlage detektiert.

2. Verfahren nach Anspruch 1, dadurch gekennzeichnet, daß der Versatz zwischen Sensor und Nähnadel als Korrekturwert bei der Abarbeitung des digital erfaßten und abgespeicherten Nahtverlaufes manuell eingegeben wird.

3. Verfahren nach Anspruch 1, dadurch gekennzeichnet, daß der Versatz zwischen Nähnadel und Sensor derart automatisch erfaßt wird, daß auf dem Nähgut-Träger exakt unter der Nähnadel, vorzugsweise in der Null-Lage des Nähgut-Trägers, eine punktförmige Markierung angeordnet wird, und daß anschließend der Nähgut-Träger programmgesteuert so lange verfahren wird, bis die Markierung von dem Sensor detektiert wird, wobei die dementsprechend erfaßten Koordinaten-Werte als Korrektur-Werte bei der Abarbeitung des abgespeicherten Nahtverlaufes berücksichtigt werden.

4. Vorrichtung zur Eingabe bzw. nachträglichen manuellen Korrektur eines gemäß dem Verfahren nach einem der Ansprüche 1 bis 3 erfaßten Nahtverlaufes, dadurch gekennzeichnet, daß eine Dreh-Einrichtung zur Einstellung des gewünschten Richtungswinkels des Nähmuster-Verlaufs vorgesehen ist, welche in einer Richtung senkrecht zu der Dreh-Einstellebene gegen eine Rückstellfeder zur Auslösung eines Kontakts betätigbar ist.

5. Vorrichtung nach Anspruch 4, dadurch gekennzeichnet, daß die Dreheinrichtung einen Inkrementalgeber mit zugeordnetem Sensor zur Erfassung eines Winkellage-Signals umfaßt, wobei durch den Druckkontakt das zum Zeitpunkt der Auslösung jeweils anliegende Winkellage-Signal abgespeichert wird.

FIG.1

FIG.2